# FASCICULE DE BREVET EUROPEEN

(11) **EP 0 396 482 B1**
(45) Date de publication et mention de la délivrance du brevet: **01.12.1993**
(21) Numéro de dépôt: 90470021.8
(22) Date de dépôt: 25.04.1990
(51) Int. Cl.: B29C 49/42, B29C 31/00

(54) **Installation de fabrication de corps creux en matière plastique à partir de préformes, équipée de moyens de basculement de ces préformes**
Anlage zum Herstellen von hohlen Kunststoffartikeln aus Vorformlingen, versehen mit Mitteln zum Schwenken dieser Vorformlinge
Installation for the manufacture of plastic hollow articles made from preforms, equipped with means for pivotally inverting said preforms

(30) Priorité: 03.05.1989 FR 8905885
(43) Date de publication de la demande: 07.11.1990
(73) Titulaire: SIDEL, F-76600 Le Havre (FR)
(72) Inventeur: Doudement, Gérard, F-76600 Le Havre (FR); Evrard, Alain, F-76600 Le Havre (FR)
(74) Mandataire: Gorree, Jean-Michel

(56) Documents cités:
- DE-A- 3 637 694
- FR-A- 2 310 854
- FR-A- 2 389 580
- GB-A- 2 074 496
- US-A- 1 981 642
- US-A- 2 806 803

## Description

### Installation de fabrication de corps creux en matière plastique à partir de préformes, équipée de moyens de basculement de ces préformes.

La présente invention concerne des perfectionnements apportés aux installations de fabrication de corps creux en matière plastique à partir de préformes, équipées de moyens de basculement de ces préformes, et plus particulièrement elle concerne des perfectionnements apportés à une installation pour la fabrication de corps creux en matière plastique, tels que bouteilles, flacons ou analogues, à partir de préformes présentant une extrémité fermée et une extrémité ouverte formant goulot, cette installation étant équipée d'au moins un transporteur muni de supports pour les préformes qui sont déplacés selon une trajectoire prédéterminée, ces supports de préformes étant disposés les uns à la suite des autres et aptes à pivoter sur une plage angulaire donnée sous l'action de moyens de commande de basculement de manière que les préformes puissent être amenées dans une position finale différente de leur position initiale.

Dans les machines connues de fabricaion de tels corps creux par soufflage ou étirage-soufflage, il est prévu au moins : un poste de conditionnement thermique des préformes dans lequel ces dernières sont chauffées à une température telle qu'elles puissent ensuite être moulées par soufflage ou par étirage-soufflage ; et un poste de soufflage des préformes dans des moules dont l'empreinte a la forme du corps creux à obtenir ; des transporteurs respectifs assurant l'amenée des préformes au poste de traitement thermique et le transfert des préformes entre ce dernier et le poste de soufflage.

Dans une telle machine, les préformes sont amenées au poste de conditionnement thermique en position verticale, le col du goulot ouvert de la préforme étant tourné vers le haut. Il s'est avéré que le chauffage de la préforme dans la position col en haut n'était pas adapté à un conditionnement thermique satisfaisant. En effet, comme la chaleur a tendance à monter, le col situé en haut est également chauffé : il tend donc à se déformer et à perdre la configuration définitive qui lui avait été donnée lors de la fabrication de la préforme.

La solution connue pour résoudre ce problème est de chauffer la préforme col en bas pour éviter la déformation précitée dudit col. Il est donc nécessaire de prévoir un dispositif de retournement qui permette de faire passer la préforme de la position col en haut à la position col en bas avant son chauffage, puis de la ramener en position col en haut pour la suite du processus de fabrication d'un corps creux achevé.

Un exemple de dispositif connu de retournement est décrit et représenté (fig. 4 et 5) dans le document FR-A-2 479 077. Ce dispositif comprend :
- une came, plane, de type femelle dont le chemin de came est en forme de U,
- un secteur denté muni d'un doigt dont l'extrémité porte un galet engagé dans le chemin de came, pivotant autour d'un axe horizontal, et
- une porte-préforme, pivotant autour d'un axe horizontal, muni d'un pignon denté en prise avec le susdit secteur denté.

Le pivotement du porte-préforme est assuré par l'intermédiaire du secteur denté pivotant autour de son axe, sous l'action du galet qui suit le chemin de came et qui engrène avec le pignon solidaire du porte-préforme.

Bien qu'il fonctionne de façon satisfaisante, ce dispositif est difficile à régler (notamment parallélisme des dentures du secteur denté et du pignon) et onéreux à fabriquer ; en outre sa structure est relativement complexe.

De part le document US-A-1 981 642, on connaît également un dispositif de transfert de bouteilles dans la première partie duquel les bouteilles, supportées par des berceaux, pivotent d'un quart de tour depuis une position sensiblement horizontale jusqu'à une position verticale. Ce pivotement est provoqué par un galet solidaire du berceau qui est engagé dans un came et qui se déplace le long de celle-ci. La came est de type femelle avec une section en U et a la forme d'une portion d'hélice enroulée sur un cylindre.

Ce dispositif connu, prévu pour une implantation dans une partie en alignement du transporteur de bouteilles, ne peut pas, dans des conditions économiques acceptables, être modifié pour une implantation dans une partie courbe du transporteur : en effet la réalisation d'une came femelle à section en U en forme de portion d'hélice enroulée autour d'un tore serait d'une complexité technologique extrême et d'un coût prohibitif.

En outre, les deux dispositifs de retournement précités nécessitent trop de place pour pouvoir être emplantés dans un environnement très encombré.

L'invention a donc essentiellement pour but de remédier aux inconvénients des dispositifs antérieurs et de proposer une solution technologique qui satisfasse mieux aux diverses exigences de la pratique, et qui notamment consiste en un agencement de structure mécanique relativement simple, avec un minimum de pièces en mouvement, ne nécessitant qu'un minimum d'entretien en cours d'utilisation, qui soit d'un coût réduit aussi bien à la construction qu'à l'usage.

A ces fins, l'installation conforme à l'invention se caractérise essentiellement en ce que lesdits moyens de commande comprennent :
- une pièce de guidage allongée et fixe formant came de type mâle, constituée par un guide filiforme en forme de tronçon d'hélice enroulée autour de la trajectoire suivie par l'axe de pivotement des supports de préformes, ce tronçon d'hélice ayant une longueur établie en fonction du pas d'hélice et de l'amplitude angulaire de basculement requis pour les préformes,
- et des moyens d'appui solidaires de chaque support et aptes à coopérer avec la susdite pièce formant came de manière telle que, au cours du déplacement des supports sur leur trajectoire précitée, les moyens d'appui, guidés par la pièce formant came, entraînent chaque support à basculer,

et en ce que, le transporteur étant au moins en partie circulaire, le tronçon d'hélice formé par la pièce formant came est enroulé autour d'un tore ayant pour axe la trajectoire de l'axe de pivotement du support.

L'agencement conforme à l'invention est particulièrement avantageux dans la mesure où le nombre des pièces composantes est réduit et où peu d'entre elles sont mobiles. On peut en outre noter dès à présent qu'en équipant les moyens d'appui avec des galets fous portant sur la pièce formant came, il est possible de réduire considérablement les frottements.

De façon intéressante, les moyens d'appui comprennent au moins deux doigts solidaires du support et engagés de part et d'autre de ce guide filiforme.

Comme déjà indiqué, chaque doigt est équipé d'un galet fou apte à assurer un contact roulant sans glissement avec la pièce formant came, ce qui permet de réduire au maximum les frottements et les usures d'organes.

Dans une application préférée de l'agencement conforme à l'invention où l'on souhaite obtenir un retournement complet de la préforme, la pièce formant came s'étend sur sensiblement un demi-tour d'enroulement hélicoïdal afin que chaque support de préforme pivote d'environ 180° de manière telle que la préforme passe d'une position verticale d'entrée avec le goulot en haut ou respectivement en bas à une position verticale de sortie avec le goulot en bas ou respectivement en haut. Bien entendu, dans le cas où l'installation comporte un poste pour le traitement des préformes dans lequel les préformes doivent être disposées goulot en bas alors qu'en aval et en amont dudit poste les préformes doivent être disposés goulot en haut, on prévoit deux dispositifs de retournement disposés respectivement en aval et en amont dudit poste. Dans un tel cas, il est avantageux que les pièces formant came appartenant respectivement aux deux dispositifs de retournement situés en aval et en amont du poste possèdent des pas d'enroulement inverses l'un de l'autre de manière que les supports de préforme décrivent, respectivement en sens inverses, la même trajectoire en arc de cercle, notamment située à l'opposé du transporteur sur lequel sont montés les supports pivotants.

Outre les avantages précités procurés par l'agencement conforme à l'invention, on notera qu'il est possible également de procéder aisément à sa mise en place dans une installation déjà existante, en lieu et place d'un dispositif de retournement préexistant, par exemple du type à secteur denté cité plus haut.

L'invention sera mieux comprise à la lecture de la description qui suit de certains modes de réalisation préférés donnés uniquement à titre d'exemples non limitatifs. Dans cette description on se réfère aux dessins annexés sur lesquels :
- les figures 1 et 2 sont des schémas illustrant en vue de dessus respectivement deux types d'installations visées par l'invention ;
- les figures 3 et 4 sont deux vues schématiques montrant, dans deux positions fonctionnelles différentes, un support de préforme associé aux dispositions conformes à l'invention ; et
- la figure 5 est une vue schématique de dessus, dans la configuration de l'installation de la figure 1, illustrant les dispositions conformes à l'invention et leur mode de perfectionnement.

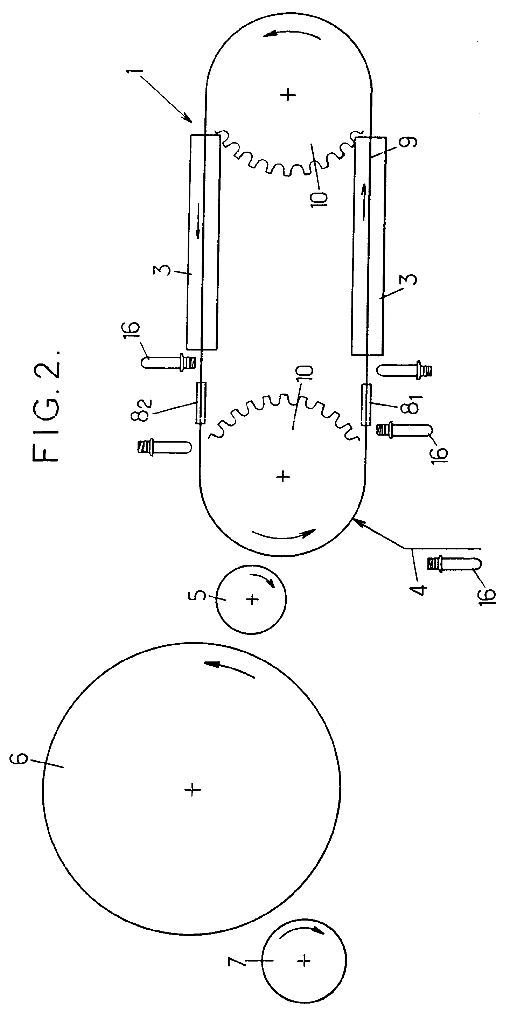

La figure 1 montre schématiquement une installation visée par l'invention, du type à poste de conditionnement thermique circulaire.

Le poste de conditionnement thermique, désigné dans son ensemble par la référence numérique 1, comprend un plateau horizontal 2 tournant autour d'un axe vertical X-X. A la périphérie du plateau sont disposés des supports de préformes (non représentés à la fig. 1) dont il sera plus spécialement question plus loin ; ces supports sont montés pivotants de manière à pouvoir basculer d'environ 180°. A l'extérieur du plateau sont disposés des fours fixes 3, par exemple à rayonnement infra-rouge, destinés au traitement thermique des préformes entraînées par le plateau.

En amont du poste de conditionnement thermique, un dispositif d'amenée 4 amène les préformes jusqu'au plateau où elles sont positionnées sur leurs supports respectifs.

En aval du poste de conditionnement thermique, un dispositif de transfert 5 recueille les préformes chauffées et les amène à un poste de soufflage 6, lui aussi agencé sous forme d'une unité tournante comportant une pluralité de moules dans chacun desquels s'effectue le processus de soufflage ou d'étirage-soufflage permettant de former une bouteille à partir d'une préforme. A la sortie du poste de soufflage 6, un autre dispositif de transfert 7 recueille les bouteilles et les emmène à l'extérieur de l'installation.

En amont et en aval du poste de traitement thermique 1, les préformes sont disposées col en haut ; au sein du poste de traitement thermique les préformes sont disposées col en bas. On prévoit, avant et après les fours, des dispositifs de retournement respectivement 8₁ et 8₂ qui disposent les préformes dans la position requise par une simple rotation de 180° de leurs supports respectifs.

La figure 2 représente schématiquement une autre réalisation d installation visée par l'invention, dans laquelle le poste de conditionnement thermique est du type linéaire. Sur la figure 2, on a utilisé les mêmes références numériques pour désigner les organes ou parties identiques à ceux correspondants de la figure 1. Le poste de conditionnement thermique comprend un transporteur sans fin 9 supporté par deux roues extrêmes 10 (dont l'une est motrice) ; le transporteur sans fin 9 est équipé des supports de préformes montés pivotants ; les fours 3 sont répartis le long des sections droites du transporteur et les préformes effectuent un tour quasi complet, leur entrée et leur sortie s'effectuant au voisinage de la roue 10 située à gauche sur le dessin. Les dispositifs de retournement des préformes 8₁ et 8₂ sont disposés entre cette roue 10 et les fours. Pour le reste, cette installation est identique à celle de la fig. 1.

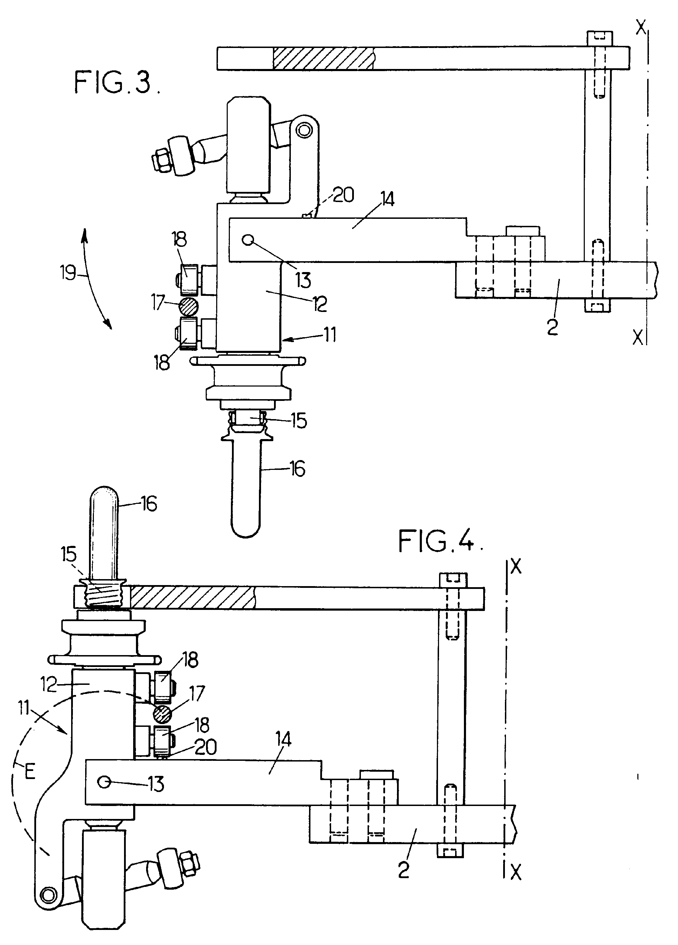

Les figures 3 et 4, auxquelles on se réfère maintenant plus particulièrement, montrent l'agencement d'un support de préforme. Ce support désigné dans son ensemble par la référence 11, comprend un corps 12, par exemple de forme allongée, qui est monté à pivotement, par l'intermédiaire d'un axe horizontal 13, sur un bras ou un étrier 14, lui-même solidaire de l'appareil mobile (plateau 2 de l'installation de la fig. 2 comme supposé sur les fig. 3 et 4, ou bien transporteur sans fin 9 de l'installation de la fig. 2). A une de ses extrémités, le corps 12 est muni d'un embout de fixation 15 destiné à recevoir par emmanchement le goulot de la préforme 16. Dans l'exemple représenté, la préforme s étend donc verticalement. Le corps 12 peut être en outre muni de divers équipements utiles pour le processus de fabrication des bouteilles, mais qui n'ont pas de rapport direct avec l'invention, et qui ne seront donc pas décrits ici. Bien entendu, de nombreuses variantes de réalisation ou d'autres modes de réalisation des supports sont possibles.

Pour provoquer le basculement du support 11 et amener la préforme de la position col en haut (fig. 3) à la position col en bas (fig. 4), on prévoit, selon l'invention, d'équiper chaque support avec des moyens d'appui aptes à coopérer de façon glissante, au cours du déplacement du support entraîné par l'organe mobile (plateau ou transporteur sans fin), avec une pièce de guidage allongée formant came qui s'étend le long de la trajectoire suivie par les supports, cette pièce formant came étant constituée en forme de tronçon d'hélice enroulée autour de la trajectoire suivie par l'axe 13 de pivotement des supports 11.

En se reportant maintenant plus spécifiquement aux fig. 3 à 5, la pièce formant came est de type mâle filiforme et est constituée par une barre ou une tige métallique 17 enroulée en hélice. Cette tige 17 s'étend sur environ un demi-tour d'enroulement de l'hélice pour provoquer un pivotement d'environ 180° des supports 11, et le pas de l'hélice, autrement dit la longueur de la tige 17, est choisie en fonction de la rapidité de pivotement souhaitée. Dans le cas d'une trajectoire circulaire (cas représenté à la fig. 5 pour l'installation de la fig. 1), la tige est enroulée autour d'un tore ayant pour axe la trajectoire circulaire (désignée par T sur la fig. 5) de l'axe de pivotement 13 des supports lors de la rotation du plateau 2 (enveloppe désignée par E sur la fig. 5) ; dans le cas d'une trajectoire rectiligne (cas de l'installation de la fig. 2), la tige est enroulée autour d'un cylindre de révolution ayant pour axe la trajectoire linéaire de l'axe de pivotement 13 des supports lors du mouvement du transporteur 9. La préparation de la tige 17 dans sa configuration définitive peut être facilement effectuée en cintrant une tige métallique autour d'un tronçon de tube au diamètre approprié, rectiligne ou cintré en arc de cercle.

En outre, chaque support 11 est équipé de deux doigts latéraux sensiblement parallèles et munis respectivement de deux galets fous 18 écartés l'un de l'autre, entre lesquels peut s'engager la tige 17 au cours du processus de retournement. L'écartement des deux galets 18 est sensiblement supérieur à l'épaisseur ou au diamètre de la tige 17 de manière à éviter des coincements au cours du déplacement, en particulier lorsque le pas de l'helice est faible. Le recours à des galets fous permet d'assurer un contact roulant sans glissement, et d'éviter les frottements et les usures inhérents à un guidage par des doigts fixes.

A la figure 5, on a représenté en 8₁ le processus de retournement de la préforme col en haut-col en bas qui s'effectue en amont des fours de conditionnement thermique, et en 8₂ le processus de retournement inverse de la préforme col en bas-col en haut qui s'effectue à la sortie des fours.

Compte tenu de la structure de montage des supports 11 sur le plateau 2 ou le transporteur sans fin 9, il est souhaitable, dans le souci de simplifier cette structure, que les deux basculements s'effectuent en sens inverses l'un de l'autre sur la même trajectoire semi-circulaire, la préforme 16 passant à l'extérieur comme schématisé par la double flèche 19 de la fig. 3. Cela implique que les deux tiges de guidage 17 possèdent des sens d'enroulement respectivement inverses l'un par rapport à l'autre, comme représenté sur la fig. 5 : dans cet exemple, en amont des fours (repère 8₁), la tige 17 suit une hélice ayant un pas à gauche (ou sens trigonométrique), tandis qu'en aval des fours (repère 8₂) le pas d'enroulement est à droite (sens inverse du sens trigonométrique).

Enfin, comme montré aux fig. 3 et 4, chaque bras ou étrier 14 est muni d'un doigt de butée 20 tourné vers le haut et sur lequel vient reposer le galet 18 qui est le plus proche de l'axe de pivotement 13 lorsque le support 11 est en position renversée (fig. 4). Cette butée procure une référence fixe pour un positionnement sensiblement vertical de la préforme et donc pour un positionnement prédéterminé de la préforme par rapport aux sources de chaleur des fours.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes. En particulier, on comprendra que les moyens conformes à l'invention sont propres à assurer un basculement des supports avec une quelconque amplitude angulaire : cette amplitude angulaire est déterminée uniquement par la longueur curviligne de la pièce formant came.

## Revendications

1. Installation pour la fabrication de corps creux en matière plastique, tels que bouteilles, flacons ou analogues, à partir de préformes (16) présentant une extrémité fermée et une extrémité ouverte formant goulot, cette installation étant équipée d'au moins un transporteur (2, 9) muni de supports (11) pour les préformes qui sont déplacés selon une trajectoire prédéterminée (T), ces supports de préformes étant disposés les uns à la suite des autres et aptes à pivoter (19) sur une plage angulaire donnée sous l'action de moyens de commande de basculement de manière que les préformes puissent être amenées dans une position finale différente de leur position initiale,
caractérisée en ce que lesdits moyens de commande comprennent :
- une pièce de guidage allongée et fixe (17) formant came de type mâle, constituée par un guide filiforme en forme de tronçon d'hélice enroulée autour de la trajectoire (T) suivie par l'axe de pivotement (13) des supports (11) de préformes, ce tronçon d'hélice ayant une longueur établie en fonction du pas d'hélice et de l'amplitude angulaire de basculement requis pour les préformes,
- et des moyens d'appui (18) solidaires de chaque support (11) et aptes à coopérer avec la susdite pièce formant came de manière telle que, au cours du déplacement des supports sur leur trajectoire précitée, les moyens d'appui, guidés par la pièce formant came, entraînent chaque support à basculer,
et en ce que, le transporteur (2) étant au moins en partie circulaire, le tronçon d'hélice formé par la pièce formant came (17) est enroulé autour d'un tore ayant pour axe la trajectoire de l'axe de pivotement du support.

2. Installation selon la revendication 1, caractérisée en ce que les moyens d'appui comprennent au moins deux doigts saillants qui sont solidaires du support et qui sont engagés de part et d'autre de ce guide filiforme.

3. Installation selon la revendication 2, caractérisée en ce que chaque doigt est équipé d'un galet fou (18) apte à assurer un contact roulant sans glissement avec la pièce formant came.

4. Installation selon l'une quelconque des revendications 1 à 3, pour le retournement des préformes, caractérisée en ce que la pièce formant came s'étend sur sensiblement un demi-tour d'enroulement hélicoïdal afin que chaque support de préforme pivote d'environ 180°, de manière telle que la préforme passe d'une position verticale d'entrée avec le goulot en haut ou respectivement en bas à une position verticale de sortie avec le goulot en bas ou respectivement en haut.

5. Installation selon la revendication 4, comportant un poste pour le traitement des préformes dans lequel les préformes doivent être disposées goulot en bas alors qu'en aval et en amont dudit poste les préformes doivent être disposées goulot en haut, caractérisée en ce qu'elle comporte deux dispositifs de retournement (en 8₁ et 8₂) disposés respectivement en aval et en amont dudit poste.

6. Installation selon la revendication 5, caractérisée en ce que les pièces formant came appartenant respectivement aux deux dispositifs de retournement situés en aval et en amont du poste possèdent des pas d'enroulement inverses l'un de l'autre de manière que les supports de préforme décrivent, respectivement en sens inverses, la même trajectoire en arc de cercle, notamment située à l'opposé du transporteur sur lequel sont montés les supports pivotants.

## Patentansprüche

1. Anlage zum Herstellen von hohlen Kunststoffartikeln, wie Flaschen, Flakons und dergleichen, aus Vorformlingen (16) mit einem geschlossenen Ende und einem einen Hals bildenden offenen Ende, wobei die Anlage wenigstens einen Förderer (2, 9) aufweist, der mit Trägern (11) für die Vorformlinge versehen ist, die längs einer vorbestimmten Bahn (T) verschoben werden, wobei die Vorformlingsträger hintereinander angeordnet und in einem Winkelbereich schwenkbar (19) sind, der durch die Aktion von Schwenkbefehlsmitteln vorgegeben wird, und zwar in der Weise, daß die Vorformlinge in eine von ihrer Anfangslage abweichende Endlage einstellbar sind, **dadurch gekennzeichnet,** daß die erwähnten Befehlsmittel aufweisen:
- ein langgestrecktes feststehendes Führungsteil (17) in Form einer Außensteuerkurve aus einer drahtförmigen Führung in Form eines wendelförmigen Abschnitts, der um die Bahn (T) der Schwenkachse (13) der Vorformlingsträger (11) herumläuft, wobei der wendelförmige Abschnitt eine Länge hat, die als Funktion der Wendel-Ganghöhe und des für die Vorformlinge erforderlichen Schwenkwinkels gewählt ist,
- und Stützmittel (18), die mit jedem Träger (11) fest verbunden sind und mit dem erwähnten, eine Außensteuerkurve bildenden Teil derart zusammwirken können, daß sie im Verlaufe der Verschiebung der Träger auf ihrer erwähnten Bahn, geführt durch das Steuerkurventeil, jeden Träger verschwenken,
und daß, wobei der Förderer (2) wenigstens teilweise kreisförmig ist, der durch den die Steuerkurve (17) bildenden Teil gebildete wendelförmige Abschnitt um einen Torus herumgewunden ist, der als Achse die Bahn der Schwenkachse des Trägers aufweist.

2. Anlage nach Anspruch 1, dadurch gekennzeichnet, daß die Stützmittel wenigstens zwei vorstehende Zapfen aufweisen, die fest mit dem Träger verbunden sind und auf beiden Seiten der drahtförmigen Führung anliegen.

3. Anlage nach Anspruch 2, dadurch gekennzeichnet, daß jeder Zapfen mit einer beweglichen Rolle (18) versehen ist, die eine rollende Berührung, ohne zu gleiten, mit dem die Steuerkurve bildenden Teil sicherstellt.

4. Anlage nach einem der Ansprüche 1 bis 3 zum Umkehren der Vorformlinge, dadurch gekennzeichnet, daß das die Steuerkurve bildende Teil sich über etwa einen halben Wendelgang erstreckt, so daß jeder Vorformlingsträger um etwa 180° geschwenkt wird, und zwar in der Weise, daß der Vorformling von einer vertikalen Eingangslage mit oben oder unten liegendem Hals bis in eine vertikale Ausgangslage mit unten oder oben liegendem Hals übergeht.

5. Anlage nach Anspruch 4 mit einer Stelle zur Behandlung der Vorformlinge, bei der die Vorformlinge stromunterhalb der Stelle mit dem Hals nach unten und stromoberhalb der Stelle mit dem Hals nach oben angeordnet sein müssen, dadurch gekennzeichnet, daß sie zwei Umkehrvorrichtungen (bei 8₁ und 8₂) aufweist, die jeweils stromunterhalb und stromoberhalb der Stelle angeordnet sind.

6. Anlage nach Anspruch 5, dadurch gekennzeichnet, daß die jeweils zu den beiden stromunterhalb und stromoberhalb der Stelle angeordneten Umkehrvorrichtungen gehörenden Steuerkurventeile auf beiden Seiten entgegengesetzten Windungssinn aufweisen, so daß die Vorformlingsträger jeweils im entgegengesetzten Sinne die gleiche Kreisbahn beschreiben, die vorzugsweise gegenüber dem Förderer liegt, auf dem die schwenkbaren Träger montiert sind.

## Claims

1. An installation for the manufacture of hollow plastic objects, such as bottles, flasks or the like, from preforms (16) having one closed end and one open end which forms a neck, said installation being provided with at least one conveyor (2, 9) equipped with supports (11) for the preforms, which are displaced along a predetermined path (T), said supports being arranged one behind the other and capable of pivoting (19) within a given angular range when acted upon by swing-motion control means, so that the preforms may be brought into a final position different from an initial position,
characterized in that said control means comprises :
- a stationary, elongated guide piece (17) forming a male cam, composed of a filiform guide in the shape of a spiral section coiled around the path (T) followed by swivel pins (13) of the preform supports, said spiral section having a length determined according to the pitch of the spiral and the angular amplitude of swing required for the preforms, and
- follower means (18) attached to each support (11) and adapted for cooperating with said cam forming piece in such a manner that, during the movement of the supports along the said path, the follower means guided by the cam forming piece cause each support to swing,
and in that, the conveyor (2) being at least partly circular, the spiral section formed by the cam forming piece (17) is coiled around a tore whose axis is the path of the swivel pins of the supports.

2. Installation according to claim 1, characterized in that the follower means comprise at least two protruding fingers attached to each support and disposed on opposite sides of the filiform guide.

3. Installation according to claim 2, characterized in that each finger is provided with a loose roller (18) capable of providing a rolling contact without slippage with the cam forming piece.

4. Installation according to anyone of claims 1 to 3, adapted for turning preforms, characterized in that the cam forming piece extends over approximately one half-turn of a helicoidal winding such that each preform support pivots approximately 180° so that the preform rotates from a vertical neck-up or neck-down entrance position to a vertical respectively neck-down or neck-up exit position.

5. Installation according to claim 4, further comprising a preform treatment station in which the preform must be positioned neck-down, while upstream and dowstream from said station the preforms must be positioned neck-up, characterized in that said installation comprises two turning device (8₁, 8₂) located respectively upstream and downstream from said station.

6. Installation according to claim 5, characterized in that the cam forming pieces of the two respective turning devices have inverted winding pitches one in relation to the other so that preform supports follow, respectively in directions inverted from one another, the same arcuated path, particularly located opposite of the conveyor on which the swivel supports are mounted.
